# FASCICULE DE BREVET EUROPEEN

(11) **EP 0 782 472 B1**
(45) Date de publication et mention de la délivrance du brevet: **02.12.1998**
(21) Numéro de dépôt: 95931263.8
(22) Date de dépôt: 19.09.1995
(51) Int. Cl.: B01D 53/64, B01D 53/56

(54) **PROCEDE D'EPURATION DES FUMEES PAR VOIE HUMIDE POUR DES POLLUANTS GAZEUX**
VERFAHREN ZUR NASSEN RAUCHGASREINIGUNG GASFÖRMIGER SCHADSTOFFE
METHOD FOR WET CLEANING GASES TO REMOVE GASEOUS POLLUTANTS

(30) Priorité: 21.09.1994 FR 9411474
(43) Date de publication de la demande: 09.07.1997
(73) Titulaire: LAB S.A., 69003 Lyon (FR)
(72) Inventeur: VICARD, Jean-François, F-69002 Lyon (FR); SIRET, Bernard, F-69100 Villeurbanne (FR); GUYOT, Laurent, F-69003 Lyon (FR)
(74) Mandataire: Monnier, Guy
(86) Numéro de dépôt international: FR9501200
(87) Numéro de publication internationale: WO9609108

(56) Documents cités:
- EP-A- 0 199 037
- EP-A- 0 487 834
- WO-A-92/19364
- DE-A- 1 945 173
- FR-A- 2 643 286
- US-A- 4 055 624

## Description

### DOMAINE DE L'INVENTION

La présente invention se réfère aux processus industriels émettant des fumées qui doivent être épurées avant rejet à l'atmosphère. Elle se réfère plus particulièrement aux procédés d'épuration des fumées par voie humide de polluants gazeux et notamment de polluants gazeux faiblement solubles.

### ETAT DE L'ART

La plupart des processus industriels émettent des fumées contenant différents polluants sous forme particulaire et/ou gazeuse. Pour la captation des poussières de très nombreuses techniques ont été proposées et mises en oeuvre : cyclone, électrofiltre sec, filtre à manche, laveur venturi, électrofiltre humide, etc. ... Pour la captation des polluants gazeux des techniques sèches et humides ont été proposées et mises en oeuvre. Dans les techniques sèches un solide finement divisé est injecté dans les fumées à épurer. Les polluants gazeux sont alors captés par les particules du dit solide soit par réaction chimique (par exemple HCl réagissant sur des particules de chaux) soit par adsorption (par exemple mercure adsorbé sur du charbon actif). Le solide finement divisé est ensuite capté dans un dépoussiéreur, par exemple électrofiltre ou filtre à manche.

Toutes ces techniques sont limitées par les difficultés inhérentes aux transferts gaz-solide et conduisent à un excès de consommation de réactifs. C'est pourquoi on préfère souvent des techniques humides en particulier lorsque la concentration à atteindre dans les fumées épurées est faible. Dans les techniques humides, un contact intime est réalisé entre les fumées et le liquide de lavage et les polluants gazeux sont transférés dans ledit liquide de lavage où ils sont soit simplement dissous dans le cas de gaz très solubles (par exemple HCl dans l'eau) soit "neutralisés" dans le cas de gaz peu solubles par réaction physico-chimique avec un réactif dispersé dans le liquide de lavage, la "neutralisation" permettrait de poursuivre la dissolution du polluant gazeux considéré malgré sa faible solubilité (par exemple SO₂ "neutralisé" en phase acqueuse par de la chaux ou du mercure "neutralisé" par adsorption en phase acqueuse sur du charbon actif).

Ces techniques humides sont en général plus efficaces que les techniques sèches, mais sont aussi limitées par exemple par la très faible solubilité de certains polluants gazeux comme le mercure métal ou le monoxyde d'azote. Elles sont aussi limités par les conditions de captation imposées par les autres polluants plus solubles et aussi présents dans les fumées à épurer. C'est pourquoi il a été proposé de modifier l'état chimique de ces polluants gazeux, en phase gazeuse, avant captation des polluants. Il a ainsi été proposé d'injecter du sulfure de sodium dans les fumées qui forme différents sulfures avec les polluants présents, notamment du sulfure de mercure avec le mercure qui est sous forme particulaire et peut donc être capté dans un dépoussiéreur placé en aval du point d'injection. L'inconvénient de cette méthode est dû au risque de dégagement d'hydrogène sulfuré au niveau de l'épuration dés fumées ou à partir des résidus de l'épuration des fumées.

D'autres méthodes ont aussi été proposées pour oxyder le monoxyde d'azote en dioxyde d'azote en injectant dans les fumées différents oxydants comme le dioxyde de chlore, l'ozone, etc. ... Puis après cette étape d'oxydation en phase gazeuse, les fumées sont épurées par voie humide. Ces méthodes ont l'inconvénient de conduire à une consommation élevée de réactifs d'une part en raison de la difficulté de mélanger l'oxydant avec un débit de fumée important, et d'autre part en raison du caractère peu sélectif de l'oxydation qui peut agir par exemple sur le dioxyde de soufre très souvent présent et qu'il est plus efficace et plus économique de capter par d'autres procédés.

Dans le brevet FR-B-2643 286 l'oxydation est réalisée de manière plus efficace en injectant dans les fumées d'une part un agent acide gazeux facilement soluble (par exemple HCl) et d'autre part, en aval, par pulvérisation, un liquide de lavage contenant un composé d'oxydation (par exemple NaClO₂) qui lorsque le HCl est absorbé dans les gouttelettes de liquide réagit avec le NaClO₂ pour générer au contact des gouttelettes et des fumées un oxydant, le dioxyde de chlore dans l'exemple considéré. Cette méthode présente toutefois l'inconvénient de nécessiter un mélange homogène de l'agent acide gazeux avec un débit de fumée important en amont du laveur.

Selon le brevet US-A-4 055 624, on prépare une solution acide de chlorate en introduisant un chlorate dans une solution très acide, eventuellement en présence de chlorures alcalins. Ce liquide est envoyé dans un laveur où il est mis en contact avec le gaz à traiter contenant des Noₓ:
Du fait de réactions d'oxydation avec d'autres composés, il faut prévoir une excés de chlorate ce qui peut conduire à l'émission de ClO₂.

La présente invention vise à supprimer les inconvénients mentionnés plus haut tout en tenant compte des exigences d'une épuration multi-polluants efficace. En particulier, l'invention vise à optimiser la quantité de composé oxydant introduit, par un choix adéquat de point d'injection de ce composé.

### SOMMAIRE DE L'INVENTION

La présente invention porte sur un procédé d'épuration des fumées contenant des polluants gazeux très peu solubles dans lequel les fumées sont épurées par voie humide dans un laveur avec un ou plusieurs niveaux de dispositifs de dispersion du liquide de lavage dans les fumées à épurer, recyclage du liquide de lavage, injection d'acide ou de neutralisant dans le bac de recyclage pour ajuster le pH, et purge de déconcentration des polluants captés, et injection dans ledit liquide de lavage d'un composé d'oxydation déclenché par un/des agent(s) de déclenchement, lequel composé d'oxydation est introduit au moins dans le liquide de lavage envoyé dans le dispositif de dispersion dispersant à l'entrée du laveur ledit liquide de lavage dans les fumées à épurer, la composition du liquide de lavage en agents de de déclenchement étant maintenue substantiellement constante en amont du point d'injection du composé d'oxydation, caractérisé en ce que l'on introduit le composé d'oxydation dans le liquide de lavage en un point d'injection tel que le temps de parcours du liquide entre ledit point d'injection et ledit dispositif de dispersion assure que le déclenchement du composé d'oxydation à l'aide du ou des agents de déclenchement contenus dans le liquide de lavage est substantiellement réalisé au moment de la dispersion dudit liquide de lavage.

Les polluants oxydés, beaucoup plus solubles, peuvent être transférés dans un liquide de lavage.

Pour rendre le procédé aussi efficace que possible une variante préférée consiste à "neutraliser" par une réaction physico-chimique les polluants oxydés soit dans le laveur lui-même lorsque les exigences sur le liquide de lavage (notamment de pH) sont analogues pour l'oxydation et la neutralisation, soit dans un second laveur placé en aval lorsque les dites exigences ne sont pas compatibles.

Le plus souvent pour éviter une surconsommation de composés d'oxydation en présence de SO₂, le liquide de lavage est maintenu à un pH acide, de préférence entre 1,5 et 3,5.

### DESCRIPTION DETAILLEE DE L'INVENTION

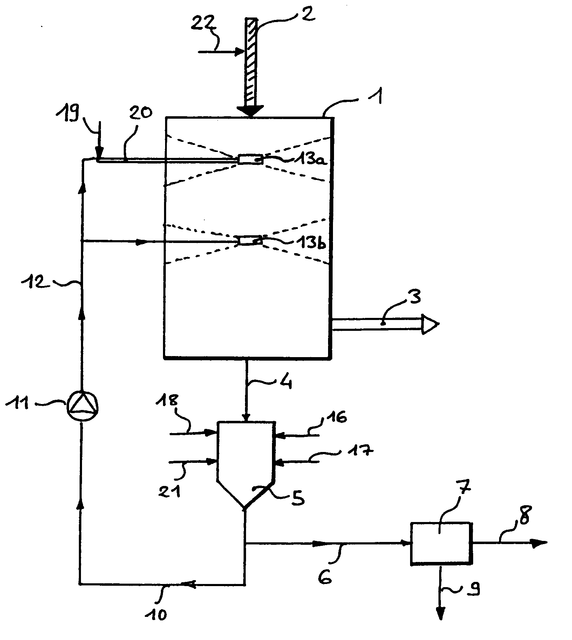

Une meilleure compréhension de l'invention peut être obtenue maintenant grâce à la description détaillée suivante en liaison avec la figure 1 qui donne une représentation schématique du procédé objet de l'invention.

Les fumées à épurer (2) pénètrent dans un laveur (1) où elles sont contactées par le liquide de lavage recyclé (12) réparti dans les gaz par des dispositifs appropriés (13a) et (13b). Elles sortent du laveur épurées (3). Le liquide de lavage (12) introduit dans le laveur (1), après contact avec les gaz est récupéré (4) dans un bac (5) qui peut être aménagé dans la base du laveur (1). Le plus souvent la composition des fumées à épurer (2) est variable et le liquide de lavage récupéré (4) est à un pH variable. Une adjonction d'agent acide liquide (16) ou une adjonction d'agent neutralisant (17) peut être faite dans le bac (5) de manière à ce que le liquide de lavage soit maintenu à un pH constant. Le pH peut être mesuré sur le liquide de lavage (4) ou sur le liquide (10) ou sur le liquide (12).

A la sortie du bac (5) une faible partie du liquide (6) est dirigée sur une station de traitement (7). Les polluants captés et les produits de réaction sont précipités et séparés sous forme de résidus solides (9) tandis que l'eau claire (8) contient des sels neutres ne posant en général pas de problème vis à vis du milieu naturel.

La plus grande partie du liquide (10) est renvoyée vers le laveur par une pompe de recyclage (11), et le liquide de recyclage ainsi mis sous pression est à nouveau dispersé dans les filmées à épurer par les dispositifs appropriés (13a) et (13b). Un appoint d'eau (18) peut être réalisé dans le bac (5) pour maintenir constant le niveau de liquide dans ce bac et ainsi compenser l'eau évaporée dans le laveur (1) pour saturer les fumées en vapeur d'eau ainsi que la purge de déconcentration (6).

Les dispositions ci-dessus, en soi connues, sont complétées de la manière suivante pour mettre en oeuvre l'invention. Le dispositif de dispersion (13a) placé à l'entrée du laveur est alimenté en liquide de lavage sous pression (12) par l'intermédiaire d'un dispositif (20) à l'entrée duquel est injecté un composé d'oxydation. Le dispositif (13a) est le premier dispositif de dispersion rencontré par les fumées à épurer (2) lorsqu'elles pénètrent dans le laveur (1). Ce dispositif (13a) peut être utilement constitué d'un pulvérisateur placé au centre ou de plusieurs pulvérisateurs situés dans le même plan. Le composé d'oxydation peut être utilement choisi parmi des oxydants puissants comme le chlorite de sodium, l'hypochlorite de sodium, l'ozone. Lorsque de tels oxydants puissants sont injectés dans le liquide de lavage (12) leur action oxydante peut être déclenchée systématiquement si le liquide de lavage (11) a une composition appropriée. Il en résulte la production d'agent oxydant gazeux comme le dioxyde de chlore, l'oxygène naissant, etc. ..., et la capacité du dispositif (20) est déterminée pour que le temps de parcours du liquide (11) entre l'injection (19) et le dispositif de dispersion (13a) permette de déclencher le composé d'oxydation (19). Des essais ont montré que ce temps pouvait être inférieur à 1 seconde. Si la capacité du dispositif (20) est trop importante, l'agent oxydant serait très rapidement consommé par d'autres polluants que le ou les polluants visés et déjà présents dans le liquide de lavage comme les sulfites/bisulfites provenant de la captation du SO₂ très souvent présent dans les fumées. L'injection au plus près et le déclenchement contrôlé permettent de limiter la consommation de composés d'oxydation qui sont coûteux, d'éviter les effets secondaires liés à une surconsommation de ces produits et surtout de disposer d'un agent oxydant gazeux à la surface des gouttelettes dispersées dans les fumées. Il en résulte une oxydation efficace des polluants gazeux très peu solubles comme le mercure métal ou le monoxyde d'azote ; le mercure métal Hg (0) est transformé en Hg (II) et le monoxyde d'azote en dioxyde d'azote beaucoup plus solubles et pouvant être transférés dans un liquide de lavage. Pour rendre le procédé aussi efficace que possible une variante préférée consiste à "neutraliser" par une réaction physico-chimique les polluants oxydés soit dans le laveur lui-même à l'aide de dispositifs de dispersion (13b) du liquide de lavage, lorsque les exigences sur le liquide de lavage (notamment de pH) sont analogues pour l'oxydation et la neutralisation, soit dans un second laveur placé en aval lorsque lesdites exigences ne sont pas compatibles.

Dans le cas du dioxyde d'azote, une réaction de neutralisation préférée consiste à utiliser un liquide de lavage dans lequel on injecte du sulfite de sodium (qui peut provenir de la neutralisation du dioxyde de soufre des fumées) à un pH compris entre 8,5 et 9 de préférence ; tandis que les sulfites sont oxydés, le dioxyde d'azote est réduit en azote, ce qui évite les problèmes de nitrates.

Dans le cas du mercure, d'autres réactions physico-chimiques de neutralisation peuvent être utilement mises en oeuvre : des réactions de complexation en maintenant une teneur en ions chlorures supérieure à 10 g/l (complexe HgCl₄) ou en injectant des chelates ; ou des réactions d'adsorption sur des solides finement divisés comme la poudre de charbon actif ou les cendres volantes ( de préférence à une concentration au moins égale à 5g/l).

Les agents de déclenchement sont par exemple :
- les ions hydrogènes dont la concentration est définie par le pH du liquide (de préférence en pH acide, dans la plage 1,5 à 3,5)
- les solides finement divisés comme les cendres volantes.

Les agents de déclenchement peuvent être introduits (21) dans le bac de recyclage (5) ou dans les fumées (22) en amont du laveur puis captés dans le laveur et transférés dans le liquide de lavage (4) ou encore provenir du procédé émettant les fumées à épurer.

## Revendications

1. Procédé d'épuration des fumées contenant des polluants gazeux très peu solubles, dans lequel les fumées sont épurées par voie humide dans un laveur avec un ou plusieurs niveaux de dispositifs de dispersion du liquide de lavage dans les fumées à épurer, recyclage du liquide de lavage, injection d'acide ou de neutralisant dans le bac de recyclage pour ajuster le pH, purge de déconcentration des polluants captés, et injection dans ledit liquide de lavage d'un composé d'oxydation déclenché par un des agent(s) de déclenchement, lequel compose d'oxydation est introduit au moins dans le liquide de lavage envoyé dans le dispositif de dispersion dispersant à l'entrée du laveur ledit liquide de lavage dans les fumées à épurer, la composition du liquide de lavage en agents de déclenchement étant maintenue substantiellement constante en amont du point d'injection du composé d'oxydation, caractérisé en ce qu'on introduit ledit composé d'oxydation dans le liquide de lavage en un point d'injection tel que le temps de parcours du liquide entre ledit point d'injection et ledit dispositif de dispersion assure que le déclenchement du composé d'oxydation à l'aide du ou des agents de déclenchement contenu dans le liquide de lavage est substantiellement réalisé au moment de la dispersion dudit liquide de lavage.

2. Procédé suivant la revendication 1, caractérisé en ce que le composé d'oxydation est choisi dans la famille : chlorite de sodium, hypochlorite de sodium, ozone.

3. Procédé suivant la revendication 1, 2, caractérisé en ce que les agents de déclenchement sont :
- les ions hydrogènes dont la concentration est définie par le pH du liquide (de préférence en pH acide, dans la plage 1,5 à 3,5) et/ou,
- les solides finement divisés comme les cendres volantes.

4. Procédé suivant la revendication 3, caractérisé en ce que les agents de déclenchement sont introduits dans le bac de recyclage ou sont captés par le laveur lors du passage des fumées à épurer dans ledit laveur.

5. Procédé suivant la revendication 1 ou 2 ou 3 ou 4, caractérisé en ce que les polluants oxydés sont neutralisés par une réaction physico-chimique :
- soit dans le laveur lui-même à l'aide de dispositifs de dispersion du liquide de lavage placés en aval des dispositifs de dispersion dispersant le liquide de lavage dans lequel a été injecté le composé d'oxydation, lorsque les exigences sur le liquide de lavage (notamment le pH) sont analogues pour l'oxydation et la neutralisation ;
- soit dans un second laveur placé en aval lorsque lesdites exigences ne sont pas compatibles.

6. Procédé suivant la revendication 5, caractérisé en ce que le polluant à capter est du mercure métal et que ladite réaction physico-chimique consiste à complexer le mercure oxydé soit en maintenant dans le liquide de lavage une concentration en ions chlorures supérieure à 10 g/l soit en injectant un chelate dans le liquide de lavage.

7. Procédé suivant la revendication 5, caractérisé en ce que le polluant à capter est du monoxyde d'azote et que ladite réaction physico-chimique consiste à réduire en azote le dioxyde d'azote résultat de l'oxydation en injectant du sulfite de sodium dans un liquide de lavage maintenu à un pH de préférence compris entre 8,5 et 9.

## Claims

1. Method for purifying the fumes containing very barely soluble gaseous pollutants, in which the fumes are purified by the wet method in a scrubber with one or more levels of devices for dispersing the scrubbing liquid in the fumes to be purified, recycling of the scrubbing liquid, injection of acid or of neutralizing agent in the recycling tank to adjust the pH, bleed for deconcentration of the collected pollutants, and injection in said scrubbing liquid of an oxidation compound released by one or more releasing agents, which oxidation compound is introduced at least in the scrubbing liquid sent in the dispersion device dispersing at the entrance of the scrubber said scrubbing liquid in the fumes to be purified, the composition of the scrubbing liquid in releasing agents being maintained substantially constant upstream of the point of injection of the oxidation compound, characterized in that said oxidation compound is introduced in the scrubbing liquid at a point of injection such that the time of passage of the liquid between said point of injection and said dispersion device ensures that the release of the oxidation compound with the aid of the releasing agent or agents contained in the scrubbing liquid is substantially made at the moment of dispersion of said scrubbing liquid.

2. Method according to Claim 1, characterized in that the oxidation compound is selected from the family: sodium chlorite, sodium hypochlorite, ozone.

3. Method according to Claim 1, 2, characterized in that the releasing agents are:
- the hydrogen ions whose concentration is defined by the pH of the liquid (preferably acid pH, in the range of 1.5 to 3.5), and/or
- the finely divided solids such as fly-ash.

4. Method according to Claim 3, characterized in that the releasing agents are introduced in the recycling tank or are collected by the scrubber during passage of the fumes to be purified in said scrubber.

5. Method according to Claim 1 or 2 or 3 or 4, characterized in that the oxidised pollutants are neutralized by a physico-chemical reaction:
- either in the scrubber itself with the aid of devices for dispersing the scrubbing liquid placed downstream of the dispersion devices dispersing the scrubbing liquid in which the oxidation compound has been injected, when the requirements on the scrubbing liquid (particularly pH) are similar for oxidation and neutralization,
- or in a second scrubber placed downstream when said requirements are not compatible.

6. Method according to Claim 5, characterized in that the pollutant to be collected is mercury metal and said physico-chemical reaction consists in complexing the oxidised mercury either by maintaining in the scrubbing liquid a chloride ion concentration greater than 10 g/l or by injecting a chelate in the scrubbing liquid.

7. Method according to Claim 5, characterized in that the pollutant to be collected is nitrogen monoxide and said physico-chemical reaction consists in reducing into nitrogen the nitrogen dioxide resulting the oxidation by injecting sodium sulfite in a scrubbing liquid maintained at a pH preferably included between 8.5 and 9.

## Patentansprüche

1. Verfahren zur Reinigung von Rauchgasen, die sehr schwer lösliche gasförmige Schadstoffe enthalten, bei dem die Rauchgase auf feuchtem Wege gereinigt werden in einem Reinigungsgerät mit einer oder mehreren Ebenen von Vorrichtungen zur Verteilung der Waschflüssigkeit in die zu reinigenden Rauchgase, zur Rezyklierung der Waschflüssigkeit, zur Einspritzung einer Säure oder eines Neutralisierungsmittels in den Rezyklierbehälter für die Anpassung des pH-Wertes, zur Dekonzentrationsreinigung der aufgefangenen Schadstoffe und zum Einspritzen einer Oxydationsverbindung in diese Flüssigkeit, ausgelöst durch einen der Auslösewirkstoffe, wobei diese Oxydationsverbindung zumindest in die Waschflüssigkeit eingeleitet wird, die in die Verteilungsvorrichtung geschickt wird, die am Eingang des Reinigungsgerätes diese Waschflüssigkeit in den zu reinigenden Rauchgasen verteilt, wobei die Zusammensetzung der Waschflüssigkeit an Auslösewirkstoffen im wesentlichen im Vorlaufbereich des Einspritzpunktes der Oxydationsverbindung konstant gehalten wird, dadurch gekennzeichnet, daß diese Oxydationsverbindung in die Waschflüssigkeit an einem Einspritzpunkt eingeleitet wird, der derart angeordnet ist, daß die Wegzeit der Flüssigkeit zwischen dem Einspritzpunkt und der Verteilungsvorrichtung gewährleistet, daß die Auslösung der Oxydationsverbindung mit Hilfe des bzw. der Auslösewirkstoffe, die in der Waschflüssigkeit enthalten sind, im wesentlichen zum Zeitpunkt der Verteilung der Waschflüssigkeit erfolgt.

2. Verfahren nach Anspruch 1, dadurch gekennzeichnet, daß die Oxydationsverbindung in der Familie Natriumchlorid, Natriumhypochlorid, Ozon ausgewählt wird.

3. Verfahren nach den Ansprüchen 1 und 2, dadurch gekennzeichnet, daß die Auslösewirkstoffe sind:
- Wasserstoffionen, deren Konzentration durch den pH-Wert der Flüssigkeit definiert wird (vorzugsweise im sauren pH-Wert im Bereich von 1,5 bis 3,5) und/oder
- fein geteilte Feststoffe, wie beispielsweise Flugasche.

4. Verfahren nach Anspruch 3, dadurch gekennzeichnet, daß die Auslösewirkstoffe in den Rezyklierbehälter eingeleitet werden oder durch das Reinigungsgerät bei dem Durchgang der zu reinigenden Rauchgase in das Reinigungsgerät aufgefangen werden.

5. Verfahren nach Anspruch 1, 2, 3 oder 4, dadurch gekennzeichnet, daß die oxydierten Schadstoffe durch eine physikalisch-chemische Reaktion neutralisiert werden:
- entweder in dem Reinigungsgerät selbst mit Hilfe von Vorrichtungen zur Verteilung der Waschflüssigkeit, die im Nachlaufbericht der Verteilungsvorrichtungen angeordnet sind und die Waschflüssigkeit verteilen, in die die Oxydationsverbindung eingespritzt wurde, wenn die Anforderungen an die Waschflüssigkeit (insbesondere der pH-Wert) für die Oxydation und die Neutralisation gleich sind;
- oder in einem zweiten Reinigungsgerät, das im Nachlaufbereich angeordnet ist, wenn diese Anforderungen nicht vereinbar sind.

6. Verfahren nach Anspruch 5, dadurch gekennzeichnet, daß der einzufangende Schadstoff Metallquecksilber ist und daß die physikalisch-chemische Reaktion darin besteht, das oxydierte Quecksilber komplex zu machen, entweder indem in der Waschflüssigkeit eine Konzentration an Chloridionen von mehr als 10g/l aufrechterhalten wird, oder indem Chelat in die Waschflüssigkeit eingespritzt wird.

7. Verfahren nach Anspruch 5, dadurch gekennzeichnet, daß der einzufangende Schadstoff Stickstoffmonoxyd ist und daß die physikalisch-chemische Reaktion darin besteht, das Stickstoffdioxid, das von der Oxydation stammt, zu Stickstoff zu reduzieren, indem Natriumsulfit in eine Waschflüssigkeit eingespritzt wird, die auf einem pH-Wert von vorzugsweise 8,5 bis 9 gehalten wird.
